**Europäisches Patentamt**

**European Patent Office**

**Office européen des brevets**

(19)

(11) Publication number: **0 157 456**
A2

(12) # EUROPEAN PATENT APPLICATION

(21) Application number: **85200474.6**

(22) Date of filing: **28.03.85**

(51) Int. Cl.⁴: **A 01 D 78/06**

(30) Priority: **03.04.84 NL 8401042**

(43) Date of publication of application: **09.10.85**
Bulletin 85/41

(84) Designated Contracting States: **DE FR NL**

(71) Applicant: **C. van der Lely N.V., Weverskade 10 P.O. Box 26, NL-3155 ZG Maasland (NL)**

(72) Inventor: **van der Lely, Cornelis, 7 Brüschenrain, Zug (CH)**

(74) Representative: **Mulder, Herman et al, Octrooibureau Van der Lely N.V. Weverskade 10 P.O. Box 26, NL-3155 ZG Maasland (NL)**

(54) **An agricultural machine.**

(57) A crop displacing machine comprises rake members (3, 4) which each comprise two V-belts (15, 16) disposed one above the other. The V-belts (15, 16) are interconnected by crop displacing members (42) which circulate, in operation, about axes (9, 9A). In the operative part of their travel, the crop displacing members (42) are inclined to the travel direction (A) of the machine. The crop displacing members (42) may be made wholly or partly from flexible material such as natural or synthetic rubber or synthetic resin. The rake members (3, 4) are supported by supporting discs (19) which are vertically adjustable.

0157456

-1-

## AN AGRICULTURAL MACHINE

This invention relates to an agricul-tural machine comprising a drivable rake member provided with a crop displacing member.

If a known machine of this type should have a large working width which is substantially equal to or larger than the width of a tractor drawing the machine, the problem occurs that the ability of the crop displacing member to follow unevennesses of the ground is frequently insufficient to maintain a satisfactory grip on the crop over the whole, relatively large, working width. This is attributable not only to the limited ability of the rake member as a whole to follow unevennesses of the ground over the whole working width, but also to the limited capacity of each tine serving as a crop displacing member. In order to improve as much as possible the ability of each rake member to follow the ground when the working width is large, it has been necessary to use more or less complicated tine structures, but the solution of the problem is always seriously hampered by the requirement that the crop displacing members should not, to any significant extent, penetrate the turf, otherwise the displaced crop is liable to be contaminated.

According to one aspect of the present invention, the crop displacing member comprises natural or synthetic rubber or a synthetic resin and is mounted on an element (15, 16) for circulation about at least two axes (9, 9A), said element (15, 16), when viewed in plan, being inclined with respect to the intended direction (A) of operative travel of the machine.

It is thus possible to obtain a large working width across which the crop displacing member remains constantly in substantially the same position with respect to the crop to be displaced. The crop displacing member may be flexibly fastened in the operative position and may itself be flexible. The crop displacing member may be disposed at such a low level that its active part can reach into the deepest unevennesses. Consequently, all crop can be carried along across the large working width, without the flexible tine damaging the turf.

According to· a second aspect of the present invention, the crop displacing member interconnects two elongate flexible elements disposed one above the other.

According to a third aspect of the present invention, the crop displacing member comprises a metal tine embedded in natural or synthetic rubber or a synthetic resin and is mounted on an elongate flexible element for circulation about at least two axes.

According to a fourth aspect of the present invention, the crop displacing member comprises a metal tine extending between two elongate flexible elements which are disposed one above the other and are mounted for circulation about at least two axes, the tine being directed rearwardly with respect to the circulation direction, at a position between the flexible elements.

For a better understanding of the present invention and to show how it may be carried into effect, reference will now be made, by way of example, to the accompanying drawings, in which:

Figure 1 is a plan view of a crop displacing machine;

Figure 2 is a side view taken in the direction of the arrow II in Figure 1;

Figure 3 is a partly sectioned view taken on the lines III-III in Figure 2;

Figure 4 is a partly sectioned view taken on the lines IV-IV in Figure 1;

Figure 5 shows a crop engaging member viewed in the direction of the arrow V in Figure 1;

Figure 6 is a sectional view taken on the line VI-VI in Figure 5;

Figure 7 shows another embodiment of a crop engaging member viewed in the direction of the arrow V in Figure 1; and

Figure 8 is a sectional view taken on the line VIII-VIII in Figure 7.

The machine shown in the Figures comprises a trestle 1 for hitching the machine to the three-point lifting device of a tractor. The testle 1 is provided with a main frame beam 2 extending in the intended direction of operative travel of the machine, indicated by an arrow A. Two elongate rake members 3 and 4 are mounted on the beam 2, with their larger dimensions inclined to the direction A. The elongate rake member 3 is situated obliquely in front of the elongate rake member 4, with respect to the direction A, so that crop picked up by the rake member 3 is transferred, at the end of the rake member 3 nearer the rake member 4, to the rake member 4. The rake member 4 conveys the crop further in a rearward inclined direction towards its end further from the main frame beam 2, where the crop is deposited in the form of a swath, either with or without the use of a swath-forming member.

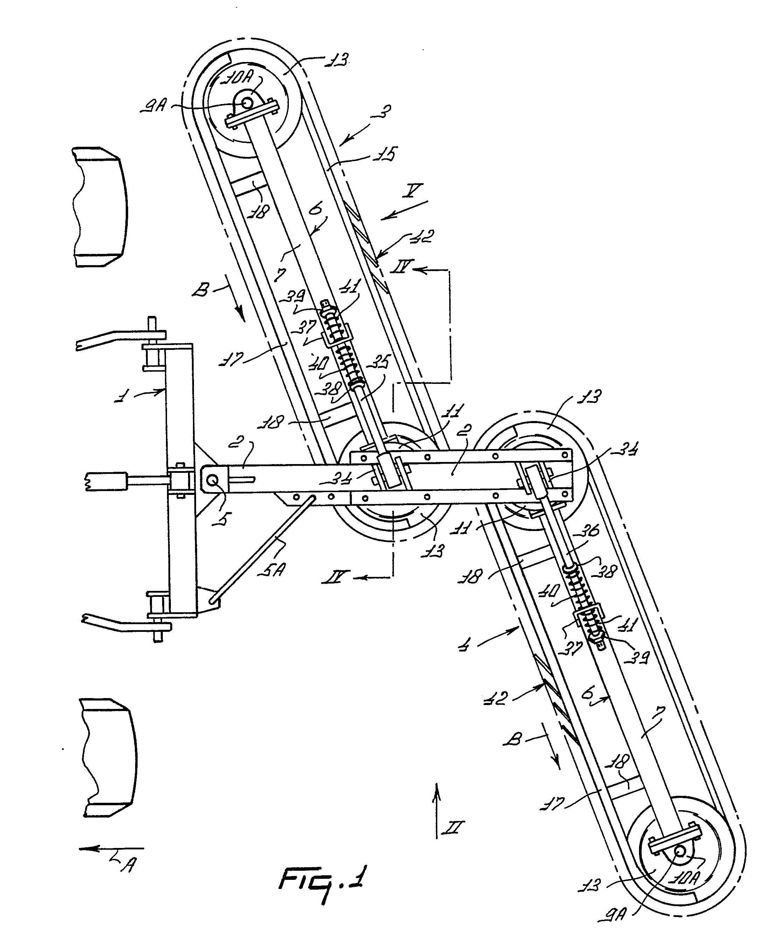

The assembly comprising the main frame beam 2 and the rake members 3 and 4 is pivotable with respect to the trestle 1 about a substantially vertical pivotal shaft 5. The centre line of the pivotal shaft 5 lies in a vertical plane which extends in the direction A and coincides with the common vertical central longitudinal plane of the trestle 1 and of the tractor. The pivotal shaft 5 is situated just behind the trestle 1. The assembly comprising the main frame beam 2 and the rake members 3 and 4 can be turned about the pivotal shaft 5 out of the position shown in Figure 1 and fixed in any one of a plurality of positions by means of a retaining rod 5A, which at one end is pivotally connected to one side of the trestle 1 and at the other end can be received in any one of a plurality of holes distributed lengthwise along the beam 2.

The elongate rake members 3 and 4 are each fastened only at one of their ends to the main frame beam 2. The rake member 3 is inclined inwardly and to the rear from its outer end which lies outside the track width of the tractor. The rake member 3 extends inwardly to a position a short distance beyond the main frame beam 2. The rake member 4 extends laterally from a position on the same side of the main frame beam 2 as the major part of the rake member 3. The rake member 4 extends away from the rake member 3 in a direction which is inclined towards the rear up to a position outside the track width of the tractor. The rake members 3 and 4 have the same length in this embodiment (they may, however, be different). The directions of the larger dimensions of the rake members are parallel to each other (but in other embodiments the rake member 4 may be inclined further to the rear than the rake member 3).

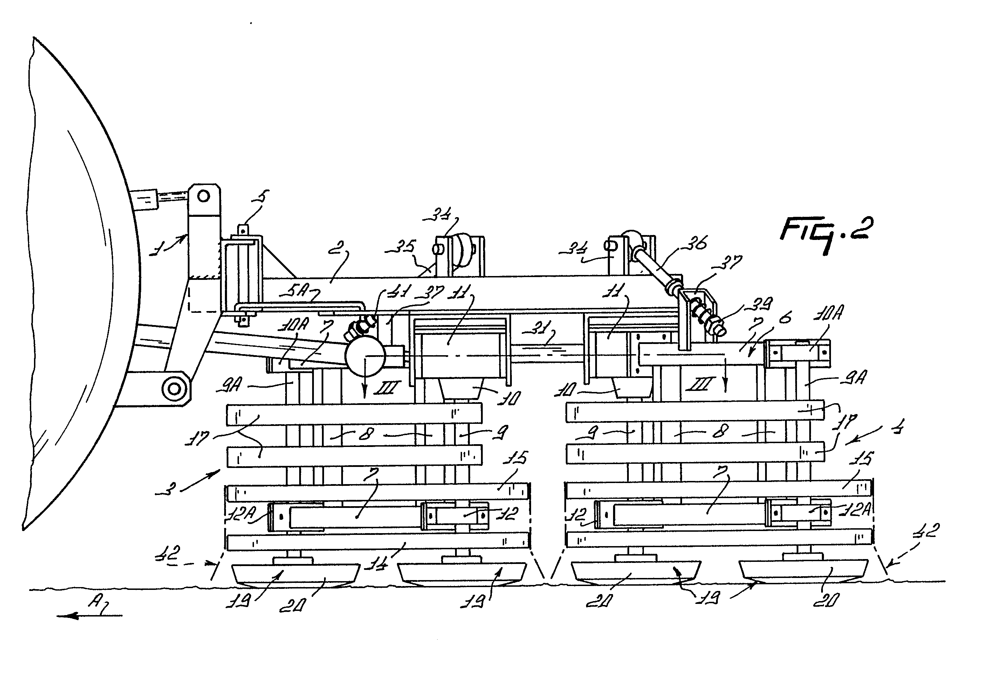

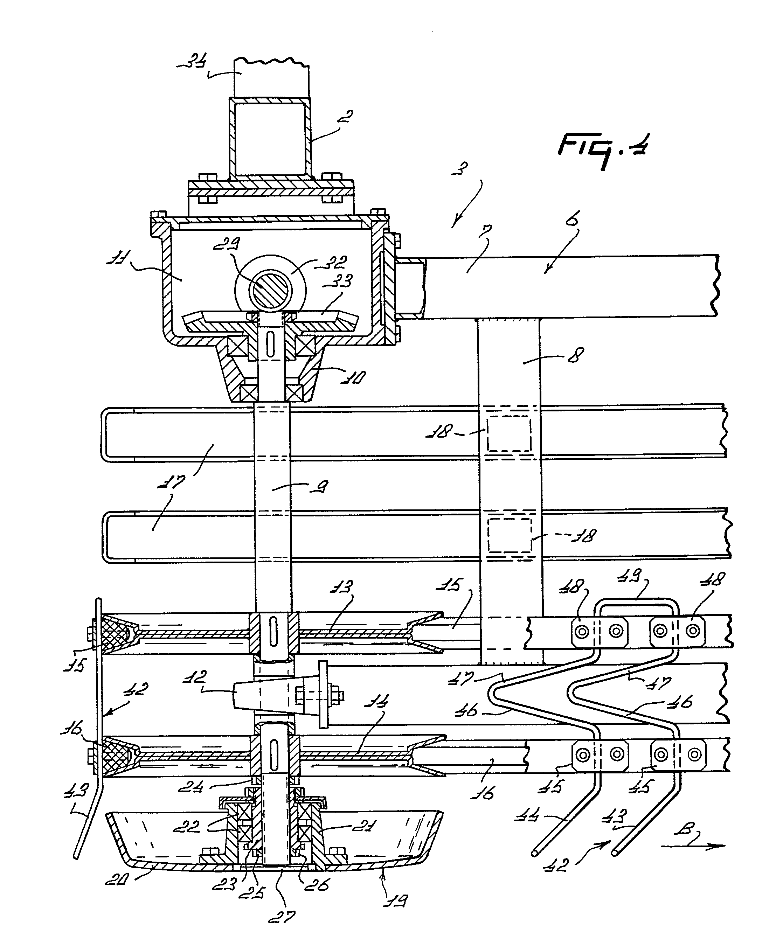

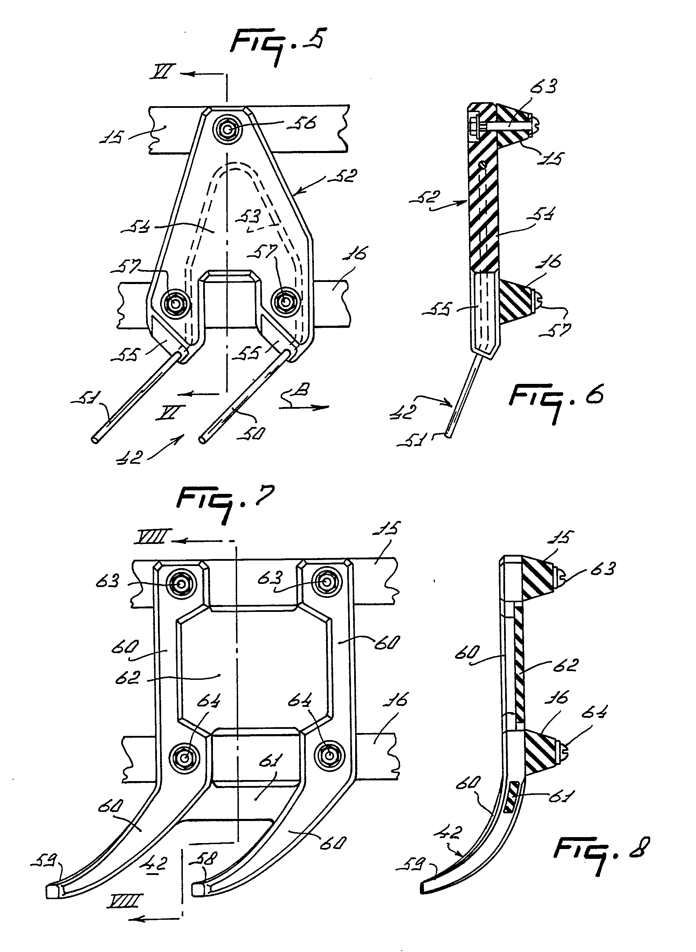

The rake members 3 and 4 will be described with reference principally to Figures 2 and 4. The constructions of the rake members 3 and 4 are substantially similar except that they are fastened to the main frame beam 2 at opposite ends, the driving gear for the two rake members being disposed substantially in a mirror-image fashion.

Each rake member 3,4 comprises a frame 6 having two substantially horizontal, mutually parallel hollow beams 7 disposed at a distance one above the other. The beams 7 are interconnected by vertical beams 8 situated near the ends of the beams 7. The beams 7 and 8 constitute a rigid unit. Each end of each beam 7 of each rake member 3, 4 supports a bearing 10, 10A, 12, 12A for an upwardly directed drive shaft 9. The bearing 10 of the upper beam 7 at the end nearer the main frame beam 2 forms part of a gear box 11 for driving the rake member concerned. The bearing 12 of the lower beam 7 at the end nearer the main frame beam 2 (Figure 4) is the same as the bearings 10A, 12A at the ends of the beams 7 away from the main frame beam 2. The shafts 9 supported by the bearings 10 and 12 are slightly inclined forwardly, from bottom to top, at an angle of about 5 to 15° to the vertical.

The bearing 12A at the end of the lower beam 7 away from the main frame beam 2 is coaxial with the bearing 10A at the end of the upper beam 7 away from the main frame beam 2. The bearings 10A and 12A support a shaft 9A, which is parallel to the shaft 9. In the working position of the machine, the shaft 9 projects from the gear box 11 and extends to a position a short distance above the ground. About midway along the length of the part of the shaft 9 projecting below the bearing 10 there is a pulley 13 which is rigidly secured to the shaft 9. At a position below the pulley 13 which is about midway between the pulley 13 and the ground, there is a pulley 14 which is rigidly secured to the shaft 9. In a similar manner and at the same distances below the gear box 10A, pulleys

-6-

13 and 14 are provided on the shaft 9A at the other end of the rake member concerned. Belts 15 and 16 pass around the two pulleys 13 and the two pulleys 14 respectively, these belts 15 and 16 supporting crop displacing members of the machine, as will be described more fully later.

As shown in Figure 4, the lower beam 7 and the bearing 12 fastening to it are situated at a vertical level between those of the two belts 15 and 16.

Protective strips 17 (of which there are two in this embodiment) are provided above the upper pulleys 13 of each of the rake members 3 and 4. The protective strips 17 are disposed one above the other and are constructed so that, as viewed in a direction parallel to the shafts 9 and 9A of the rake members, the peripheries of the protective strips 17 coincide with each other and also coincide approximately with the outer periphery of each of the assemblies comprising the pulleys 13 and the belt 15 and the pulleys 14 and the belt 16, the outer peripheries of which assemblies also approximately coincide with each other. The purpose of the protective strips 17 is to prevent crop from passing over the crop-displacing members (extending approximately up to the top edge of the belt 15) to the interior of the rake member concerned, where it could wind around structural and rotating parts. Each of the protective strips 17 has a substantially U-shaped or channel-shaped metal profile which is disposed so that the two limbs of the U are directed inwardly. The protective strips 17 are fastened to the vertical beams 8 of the frame 6 by supports 18. In the embodiment shown the protective strips 17 extend only at the front of each rake member, with respect to the direction A, to screen the upper half of the height of the rake member against penetrating crop.

Each of the rake members 3 and 4 is supported on the ground by two supporting discs 19 provided at the lower ends of the shafts 9 and 9A of the rake member. Each supporting disc 19 has a dished shape. The height of each disc 19 is equal to at least one third of the radius of the disc. Each supporting disc 19 has a slightly spherical ground contacting surface which is concave when viewed from the underside. The bottom of the dished part 20 of each supporting disc 19 has a central opening and is bolted to a hub 21 around the edge of the opening (Figure 4). The hub 21 is supported by bearings 22 on a sleeve 23 provided at the lower end of the shaft 9 or 9A respectively. The sleeve 23 has internal screwthreads engaging a screwthread on the lower part of the shaft 9 or 9A respectively. The screwthread on each shaft extends as far as the hub of the lower pulley 14 and a nut 24 is screwed onto the upper part of this screwthread to support the two pulleys 13 and 14 from the underside.

A retaining nut 25 is screwed onto the lower part of the screwthread of each shaft 9 and 9A below the underside of the sleeve 23. The retaining nut 25 is in contact with the underside of the sleeve 23 during operation. The diameter of the underside of the sleeve 23 is larger than that of the nut 25 and outwardly directed projections 26 are provided around the periphery of the underside of the sleeve 23. These projections 26 fit an annular wrench which can be applied from beneath the supporting disc 19 to fit around the underside of the sleeve 23 in engagement the extensions 26.

The sleeve 23 and the nut 25 together constitute a lock nut combination. The supporting disc 19, which is freely rotatable about the sleeve 23, can be displaced along its shaft 9 or 9A in order to adjust the height of the machine above the ground, by loosening the nut 25 from the underside, while retaining the sleeve 23 by means of the projections 26. The tool for this

-8-

purpose can be passed into the interior of the hollow hub 21 from the underside. When the nut 25 has been loosened, the sleeve 23 can be screwed up or down, as desired, by means of the tool engaging the extensions 26 until the desired position along the shaft 9 or 9A is reached. The nut 25 is then tightened again to the underside of the sleeve 23 so that the sleeve 23 together with the nut 25 can no longer turn with respect to the shaft 9 or 9A respectively. The opening at the underside of the hub 21 for receiving the tool is closed, after the supporting disc 19 has been adjusted, by a releasable cover plate 27. It will be appreciated that a supporting disc as described above can be used not only in machines of the type disclosed herein but also in other types of machines such as cyclic hay-making machines, mowing machines and the like which bear on the ground during operation.

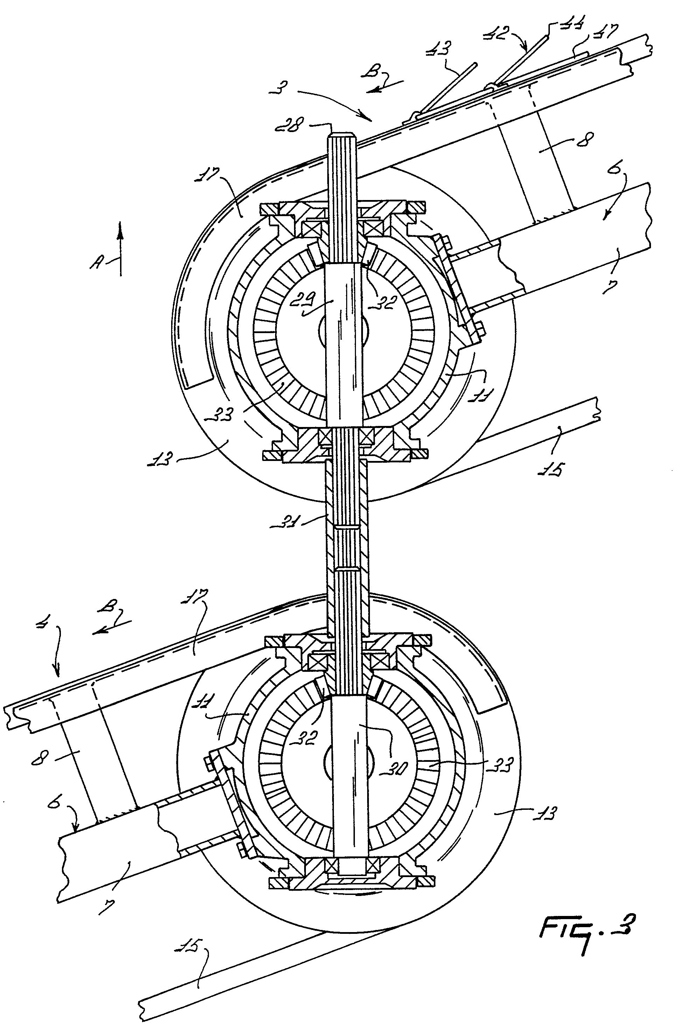

The drive gear for the two rake members 3 and 4 is shown in Figure 3, from which it will be appreciated that the adjacent gear boxes 11 of the rake members 3 and 4 are disposed directly one behind the other with respect to the direction A. The angle between the direction A and the lengthwise direction of the upper beam 7 of the rake member 3 is about 50 to 80°; in this embodiment it is about 70°. The beam 7 of the rake member 4 is in this embodiment parallel to the beam 7 of the rake member 3 so that the beam 7 of the rake member 4 is at an obtuse angle of 100 to 130°, preferably about 110° to the direction A, though, as stated above, this obtuse angle may be larger.

The gear boxes 11 are disposed below the main frame beam 2, which extends in the direction A. The machine comprises an input shaft 28, which extends in the direction A when the adjusting rod 58 is in the position shown in Figure 1 and which constitutes a splined projecting front end of a drive shaft 29 journalled in the front gear box 11. The shaft 29 also projects from the rear of the front gear box 11, this rearwardly projecting end also having splines. A drive shaft 30 of the rake member 4 is disposed in line with the shaft 29 and emerges at the front from the rear gear box 11. The forwardly projecting part of the shaft 30 also has splines. The rearwardly projecting part of the shaft 29 and the forwardly projecting part of the shaft 30 are drivably coupled by a sleeve 31, which extends between the two gear boxes 11 and which has internal splines mating with the splines on the adjacent ends of the shafts 29 and 30.

A bevel gear wheel 32 is rigidly secured to the shaft 29 and is in mesh with a bevel gear wheel 33 on the shaft 9 of the rake member 3 (see Figure 4). As shown in Figure 3, the pitch circle of the gear wheel 33 is about three times that of the driving gear wheel 32, so that a corresponding speed reduction between the shaft 29 and the shaft 9 is obtained. The gear wheels in the rear gear box 11 are disposed in a similar manner so that the speed reduction and the direction of driving are the same. These gear wheels are designated by the same reference numerals.

The entire rake member 3 and also the entire rake member 4 are pivotable with respect to the trestle 1 and the main frame beam 2 about the common centreline of the drive shafts 29 and 30, which constitutes a central axis, since the gear wheels 33 can roll around the associated gear wheels 32 during operation so that the two rake members 3 and 4 can follow unevennesses in the ground during operation.

In this embodiment, the two rake members 3 and 4 can turn about the common centreline of the shafts 29 and 30 against spring force. For this purpose the top of the main frame beam 2 is provided with two supports 34 (Figures 1 and 2), in which the end of a rod 35 for the rake member 3 and a rod 36 for the rake member 4 are pivotable up and down. The two rods 35 and 36 extend from the main frame beam 2 towards the bearings 10A of the rake members 3 and 4 respectively and are disposed above the beams 7 of the respective rake members. At a position away from the main frame beam 2, the top sides of the beams 7 of the rake members 3 and 4 are provided with supports 37 having openings for receiving the rods 35 and 36 respectively.

Each rod 35 or 36 is provided with two stops 38 and 39 disposed one on each side of the respective support 37. The outermost stop 39 is displaceable axially of the rod. Springs 40 and 41 respectively are disposed between the stop 38 and the associated support 37 and between the stop 39 and the support 37. The springs 40 and 41 are stressed compression springs. When the rake members 3 and 4 as a whole turn about the shafts 29 and 30 the springs 40 and 41 ensure quiet running of the rake members 3 and 4 when the machine runs at high speed on the field. When the supporting discs 19 disposed at the lower ends of the shafts 9A near the free ends of the rake members 3 and 4 encounter unevennesses of the ground and the free ends of the rake members move up and down, these movements are resiliently opposed by the springs 40 and 41 both in the upward and downward direction so that abrupt upwards movement of the free ends of the rake members 3 and 4 is prevented and the working members to be described later remain in their crop-displacing positions. When the adjustable supports 39 are displaced in the direction towards the supports 34, the free ends of the rake members 3 and 4 are unloaded to some extent. Thus the machine can be adapted to the nature of the ground surface to be worked.

Figure 4 shows one embodiment of a crop displacing member 42 which is carried by the two belts 15 and 16 (in this case V belts). The member 42 extends from the surface to be worked to the top edge of the upper belt 15, this distance corresponding to about half the height of the rake member concerned.

For the sake of clarity, Figure 4 shows only two crop displacing members 42. The belts 15 and 16 are, however, provided along their entire length with crop displacing members 42, the distance between adjacent crop displacing members being about the same as the width of each crop displacing member measured lengthwise of the belts 15 and 16. This applies also to the other embodiments of the crop displacing members, which will be described later.

The crop displacing member 42 provided on the outer side of the belts 15 and 16 principally comprises two spring steel tines 43 and 44, which move during operation in the direction B with respect to the frame 6 of their rake member 3 or 4. The tines 43 and 44 are directed towards the ground but are inclined to the rear with respect to the direction B and outwardly with respect to the rest of their rake member. The result is that, at the front of the rake members, with respect to the direction A, where the tines are in an operative position for displacing crop, the tines are directed slightly to the front with respect to the direction A. In the region of the lower belt 26 the tines extend parallel to the shafts 9 and 9A and are journalled in brackets 45 surrounding the outer side of the tines. The inner sides of the tines make local contact with the belt 16. Above the belt 16 the tines have parts 46 which extend in a direction opposite the direction B between the two belts 15 and 16 and, as shown in Figure 4, they are bent back at a position midway between the belts 15 and 16 to provide tine parts 47. At the belt 15 the tines again extend parallel to the shafts 9 and 9A, the tine parts

-12-

at the belt 15 being substantially in line with the tine parts at the belt 16. The tine parts at the belt 15 are fastened by means of brackets 48 to the belt 15. Directly above the belt 15 (Figure 4) the two tine parts secured by the brackets 48 are interconnected by an intermediate piece 49; the two tines 43 and 44 are thus made from a single length of spring steel wire. This spring steel wire preferably has a small diameter (preferably about 5 to 6 mms). At the lower belt 16 there is some clearance between the brackets 45 and the parts of the tines 43 and 44 received in them so that these tine parts can turn in the brackets when the tine ends are loaded.

The hairpin-shaped rearward bends formed by the tine parts 46 and 47 together with the movability in the brackets 45 enable relatively large deformation of the two tines to occur upon application of a torsional load on the free ends so that the tines can deflect greatly without cutting into the turf or soil. The parts 46 and 47 of the crop displacing member 42 also protect the crop displacing member against crop penetrating between the belts 15 and 16.

Figures 5 and 6 show a second embodiment of crop displacing member 42 which provides rows of tine ends 50 and 51 which are directed downwards, rearwards and outwards in the same manner as in the preceding embodiment of Figure 4. In the embodiment of Figures 5 and 6 the tine ends 50 and 51 are made from spring steel wire (diameter about 5 to 6 mms) and are embedded in an elastic carrying body 52 for the tines. The carrying body 52 is made from natural or synthetic rubber or a synthetic resin and is, therefore, elastically deformable. Inside the material of the elastic carrying body 52 the tine ends 50 and 51 meet portions which extend in a direction parallel to the shafts 9 and 9A and are connected to a V shaped portion 53, as shown in Figure 5 which interconnects the tine ends 50 and 51. The spring steel tine ends 50 and 51 are thus parts of an integral tine member. The V-shaped part 53 extends to a position near the underside of the upper belt 15. As shown in Figure 5, the carrying body 52 has a substantially triangular part 54 extending from the top of the belt 16 to the top of the belt 15, this triangular part 54 being integral with two mutually spaced, downwardly projecting limbs 55 through which the tine ends 50 and 51 are passed. Between the two limbs 55 the carrying body has an opening extending for a short distance above the top of the belt 16. Near the upper point of the triangular part 54, the carrying body 52 is fastened by a single bolt 56 to the belt 15, and each of the two limbs 55 are fastened by respective bolts 57 to the belt 16.

During operation, moments resulting from forces exerted on the tine ends 50 and 51 can deform to a considerable extent the part 53 embedded in the elastic material of the carrying body 52. Consequently, the relatively thin tines, as in the preceding embodiment, bear with only light pressure on the turf. The torsional elasticity of the integral tines 50 and 51 is further enhanced by the fact that the deforming part 53 is situated in the part of the elastic body 52 extending between the belts 15 and 16 and the fact that the carrying body 52 is fastened by only a single bolt to the belt 15. Thus the part 53 can deform to a considerable extent without significant obstruction. The opening between the two limbs 55 and the single bolt upper connection are important when the crop displacing member 42 of Figures 5 and 6 is situated at the periphery of the pulleys 13 and 14 and is thus curved. When the carrying body 52 is curved, the distance between radially outer ends of the two bolts 57 is increased, but the opening between the two limbs 55 enables this increase to occur without any difficulty and without intermittently stressing the material of the carrying body itself. At the top of the carrying body 52 no difficulty arises because it is fastened there by only one bolt. Between the two belts 15 and 16 the material of the carrying body disposed above the opening between the limbs 55 can adapt itself without large deformation.

Figures 7 and 8 show a third embodiment of crop displacing member 42, which is made entirely from rubber or a synthetic resin. In this embodiment the crop displacing member 42 also comprises two tines 58 and 59 which, as in the preceding embodiments, are directed downwardly and rearwardly with respect to the direction B and are outwardly inclined with respect to the rest of the rake member. These tines of elastic material continue upwardly in the form of ridges 60 extending parallel to the shafts 9 and 9A in the region between the underside of the belt 16 and the top of the belt 15. In a region a short distance below the underside of the belt 16 the ridges 60 are interconnected by a web 61, which has an upper edge, which is just below and parallel to the underside of the belt 16, and a lower edge which again is parallel to the underside of the belt 16, and is spaced from the belt 16 by a distance equal to about 20 to 40% of the distance between the tine tips and the underside of the belt 16. In the region between the belts 15 and 16 the ridges 60 are also interconnected by a web 62 which extends from an upper edge just below the underside of the belt 15 to a lower edge just above the top of the belt 16. The webs 61 and 62 are integral with the material of the ridges 60 and the tines 58 and 59. The thickness of the webs 61 and 62 is, as will be apparent from Figure 8, about 40% of the thickness of the ridges 60 for the web 62 and about half the thickness of the ridges 60 for the web 61. Each of the ridges 60 is connected by a bolt 63 to the belt 15 and by a bolt 64 to the belt 16.

In operation the tines 58 and 59 move in the direction B over the ground and the elastic nature of the material of the crop displacing member 42 permits very great adaptability to unevennesses of the ground. Consequently, as in the preceding embodiments of the crop displacing member 42, the whole machine can be set at a height such that the tine tips can reach the lowest points of the depressions in the ground surface without damage to the turf or soil as a result of forces exerted by the tines on the ground when subsequently they pass over an elevation of the ground. The elasticity of the tines 58 and 59 is enhanced by the presence of the elastic ridges 60. Deflections of the tine tips 58 and 59 relative to each other, are limited because the ridges 60 are interconnected by the webs 61 and 62. When the crop displacing member 42 is curved at the ends of the rake member 3 or 4, the fastening points of the bolts 63 and 64 become further apart, but this can take place without cyclic stretching of the material interconnecting the ridges 60. For this purpose openings are provided in the material between the ridges 60 between the two bolts 63 and between the two bolts 64, these openings extending for a short distance beyond the upper and lower edges of the belts so that in the region between the pairs of bolts the curvature of the belts has no influence. In the region between the belts 15 and 16 and in the region below the belt 16 the webs 62 and 61, owing to their relatively small thickness, can readily accommodate the mutual tilting of the ridges 60. Only a relatively small deformation of the web plates occurs, which does not give rise to cracks. The material may be reinforced, for example by a mat or wire reinforcement.

When the machine is driven from an auxiliary shaft connected between a power take-off shaft of the tractor and the input shaft 28, the rake members 3 and 4 are driven through the gear wheels 32 (Figure 3) in the direction B, the gear wheels 32 cooperating with the gear wheels 33 to drive the shafts 9 and 9A and hence the pulleys 13 and 14. The belts 15 and 16 are thus circulated in the direction B about the two shafts 9 and 9A respectively. With this design and relative dispositions of the rake members 3 and 4 a relatively large working width can be obtained. The machine, operating as a side delivery rake, has an overall working width, measured transversely of the direction A, which may be considerably larger than the width of the tractor, whilst nevertheless the machine can have a relatively low weight. The crop engaging members 42 circulating in the direction B assume an operative position at the front of the rake members 3 and 4. Crop is picked up at the outer end of the rake member 3 and at the front of the rake member 3 as the machine travels in the direction A and is displaced along the front of the rake member 3 in the direction B. At the end of the rake member 3 nearer the frame beam 2, the crop is released as a result of the rearwardly and outwardly inclined orientation of the tines and as a result of the upwardly and forwardly inclined orientation of the shafts 9 and 9A. The released crop is picked up by the front side of the rake member 4, which of course, also picks up crop lying on the ground in front of it. The crop collected throughout the working width of the machine is delivered at the free end of the rake member 4 in the form of a swath, perhaps by co-operation with a swath forming member (not shown).

It is noted that the tines of the two rake members remain in the same position relative to the ground surface and the crop when they travel along the front of the rake members over their full widths so that, throughout the working width, the crop can be picked up to the optimum extent. Since the rake members 3 and 4 are freely pivotable about the centre lines of the shafts 29 and 39, the rake members as a whole can readily follow unevennesses of the ground. By adjusting the height of the two supporting discs 19 of the rake members, the level of the tine tips of the catching members 42 can be adjusted with respect to the ground so that the tine tips can reach the lowermost points of depressions in the ground without damaging the turf on subsequent elevations, as described above.

The inclined position of the rake members 3 and 4 shown in Figure 1 with respect to the direction A can be altered by turning the main frame beam 2 with respect to the trestle 1 about the pivotal shaft 5, the machine then being fixed in the new position by the retaining rod 5A. This alteration is made to suit the nature of the crop (dry, wet, green) and the conditions of the ground surface.

It should be noted that the crop displacing members 42 described above and illustrated in the drawings may be used in other types of crop displacing machines. The crop displacing members 42 may, for example, be employed in rotary hay-making machines intended for raking and/or tedding, the crop displacing members then also being carried by supports disposed one above the other. These supports may be elastic (like the V-belts of the embodiments described herein), but more or less rigid supports may alternatively be used.

CLAIMS

1. An agricultural machine having a drivable rake member (3, 4) provided with a crop displacing member (42), characterized in that the crop displacing member (42) comprises natural or synthetic rubber or a synthetic resin and is mounted on an element (15, 16) for circulation about at least two axes (9, 9A), said element (15, 16), when viewed in plan, being inclined with respect to the intended direction (A) of operative travel of the machine.

2. A machine as claimed in claim 1, characterized in that two rake members (3, 4) are provided which are supported on a frame (1) for pivotal movement about a pivotal axis (29, 30) extending in the intended direction (A) of operative travel.

3. A machine as claimed in claim 1 or 2, characterized in that the or each rake member (3, 4) is adjustable about a substantially vertical axis (5) with respect to the direction (A) into any one of a plurality of positions.

4. A machine as claimed in any one of the preceding claims, which is a side delivery rake, characterized in that the circulation axes (9, 9A) are inclined forwardly from bottom to top.

5. A machine as claimed in any one of the preceding claims, characterized in that the or each rake member(3, 4) comprises two V belts (15, 16) disposed one above the other, and passing over pulleys (13, 14) which are journalled on a frame (6) of the rake member (3, 4) extending between the pulleys (13, 14), the V belts (15, 16) carrying crop displacing members (42).

6. A machine as claimed in claim 5, characterized in that the belts (15, 16) carrying the crop displacing members (42) are situated in the lower half of the rake member (3, 4).

7. A machine as claimed in claim 5 or 6, characterized in that each crop displacing member (42) interconnects the two V belts (15, 16).

8. A machine as claimed in any one of the preceding claims, characterized in that resilient means (40, 41) is provided for resisting movement of the or each rake member (3, 4) during operation on uneven ground.

9. A machine as claimed in any one of the preceding claims, characterized in that the crop displacing member (4) comprises at least one downwardly directed tine (43, 44, 50, 51, 58, 59), which is directed obliquely to the rear with respect to the operative direction (B) of movement of the tine.

10. A machine as claimed in claim 9, characterized in that the tine (58, 59) is made solely from natural or synthetic rubber or a synthetic resin.

11. A machine as claimed in claim 10, characterized in that the crop displacing member comprises an upwardly directed ride (60) constituting a continuation of the tine (58, 59).

12. A machine as claimed in claim 10 or 11, charactarized in that the crop displacing member (42) comprises two tines (58, 59).

13. A machine as claimed in claim 12, characterized in that the ridges (60) extending from each tine (58, 59) are interconnected by eat least one web (61, 62) which is integral with the ridges (60), the ridges (60) and the or each web (61, 62) extending substantially parallel to the circulation axes (9, 9A).

14. A machine as claimed in any one of the claims 12 or 13, characterized in that each of the two ridges (60) is fastened by a single bolt (63, 64) to each of two elongate flexible elements (15, 16) disposed one above the other.

15. A machine as claimed in any one of claims 13 or 14, characterized in that the web (62), or one of the webs, is situated only in the region between the flexible elements (15, 16) as viewed in a direction at right angles to the circulation axes (9, 9A).

16. A machine as claimed in any one of claims 12 to 15, characterized in that the web (61), or one of the webs, is disposed entirely below the underside of the lower one (16) of the flexible elements, as viewed in a direction at right angles to the circulation axes (9, 9A).

17. A machine as claimed in any one of claims 13 to 16, characterized in that the thickness of the or each web (61, 62) is smaller than that of the ridges (60).

18. A machine as claimed in any one of claims 1 to 9, characterized in that the crop displacing member (42) comprises a metal tine (50, 51) embedded in natural or synthetic rubber or a synthetic resin and mounted on an elongate flexible element (15, 16) for circulation about·at least two axes (9, 9A).

19. A machine as claimed in claim 18, characterized in that the tine is partly situated in a flexible carrying body (52) fastened to two elongate flexible elements (15, 16) disposed one above the other.

20. A machine as claimed in claim 19, characterized in that the crop displacing member (42) comprises two crop displacing tines (50, 51) formed from a single length of steel wire and supported solely by the flexible carrying body (52) and a V-shaped section (53) of the steel wire interconnecting crop displacing tines (50, 51) extends to a position below the upper flexible element (15).

21. A machine as claimed in any one of claims 19 or 20, characterized in that the carrying body (52) is fastened by a single bolt (56) to the upper flexible element (15).

22. A machine as claimed in any one of claims 19 to 21, characterized in that the carrying body (52) is fastened by two mutually spaced bolts (57) to the lower flexible element (16).

- 21 -

0157456

23. A machine as claimed in claim 22, characterized in that, in the region between the bolts (57), the carrying body (52) has an opening extending to a position near the top of the lower flexible element (16).

24. A machine as claimed in any one of the preceding claims, characterized in that the crop displacing member (42) comprises a metal tine (43, 44) extending between two elongate flexibble elements (15, 16) which are disposed one above the other and are mounted for circulation about at least two axes (9, 9A), the tine being directed rearwardly, with respect to the circulation direction (B), at a position between the flexible elements (15, 16).

25. A machine as claimed in claim 24, characterized in that the tine (43, 44) is bent in hairpin fashion. ·

26. A machine as claimed in claim 24 or 25, characterized in that the tine (43, 44) is clamped tightly at its upper end and is pivotally supported at a position below that end.

27. A machine as claimed in any one of claims 24 to 26, characterized in that the crop displacing member (42) comprises two tines (43, 44) formed from a single length of bent steel wire, the operative parts of the tines (43, 44) being inclined downwardly and to the rear with respect to the circulation direction (B) and being directed forwardly in an operative position with respect to the intended direction (A) of operative travel of the machine.

FIG.1

FIG.2

2/5

015̈7456

0157456

FIG. 3

0157456

FIG.4

FIG.5

FIG.6

FIG.7

FIG.8